# EUROPEAN PATENT SPECIFICATION

(11) **EP 3 709 527 B1**
(45) Date of publication and mention of the grant of the patent: **11.10.2023**
(21) Application number: 20162190.1
(22) Date of filing: 10.03.2020
(51) Int. Cl.: H04B 7/0408, H01Q 1/32, H04B 7/0491, H04B 7/06, H04W 84/00, B61L 15/00, H01Q 21/29, H01Q 25/00, H04B 7/10, B61L 25/02

(54) **WIRELESS COMMUNICATION SYSTEM FOR GROUND BASED VEHICLES**
DRAHTLOSES KOMMUNIKATIONSSYSTEM FÜR BODENBASIERTE FAHRZEUGE
SYSTÈME DE COMMUNICATION SANS FIL POUR VÉHICULES AU SOL

(30) Priority: 15.03.2019 SE 1950326
(43) Date of publication of application: 16.09.2020
(73) Proprietor: ICOMERA AB, 411 03 Göteborg (SE)
(72) Inventor: KARLSSON, Mats, 660 50 Vålberg (SE); REINHAGEN, Rikard, 412 65 Göteborg (SE)
(74) Representative: Lind Edlund Kenamets Intellectual Property AB

(56) References cited:
- JP-A- 2019 021 978
- US-A1- 2017 214 128
- US-A1- 2018 367 209

## Description

### TECHNICAL FIELD OF THE INVENTION

The present invention relates to the field of wireless communication technology, and more specifically to a wireless communication system and method particularly suitable for ground based vehicles, such as trains.

### BACKGROUND

The last few decades have introduced vast improvements and advancements in the field of communication technology. In fact, the advent of the internet, cellular phones and more recently smart phones and tablets has greatly changed the way we communicate and quite possibly accelerated the technological field surrounding these devices. As an inevitable consequence, there is an ever increasing demand for bandwidth in order to satisfy the market need for online connectivity which results in an increased focus on constantly developing and improving the underlying technology and systems in order to accommodate this demand.

Further, there is a rapidly increasing demand from consumers to be able to communicate through mobile phones and other handheld terminals at all times, even while traveling on e.g. trains, busses and ships.

In particular, problems are present in moving ground based vehicles, and in particular when multiple users/clients travel together on larger vehicles, and at relatively high speed, such as buses, trains and the like. At the same time, there is today an increasing demand from passengers to be able to communicate through mobile phones and other handheld terminals when travelling on e.g. trains, and also to be able to get access to the Internet with laptops, PDAs etc. Further, with the new smartphones, and the way these are used, with e.g. continuously operating applications, many phones are active at all times, meaning that many handovers are required when the train moves. Even though this problem is common for all moving vehicles, it is especially pronounced for vehicles moving at high speed, such as trains.

EP 1 175 757 and EP 2 943 011 by the same applicant describe two methods whereby many of these weaknesses resulting from wireless communication may be overcome through the concurrent use of multiple wireless links. Optimizations can hereby be based on e.g. latency, bandwidth, and other performance parameters, but also on e.g. cost. However, the aforementioned solutions are at times insufficient to obtain an optimal transmission performance and the required transmission capacity. Trains and other moving vehicles often pass through areas with bad radio coverage, and in particular in such areas, the present solutions may at times be unable to handle the required traffic.

US 2018/367209 is directed to a train communication system where antennas having different polarizations are arranged on different sides of the roof of the train, in order to provide separate links to a base station arranged in a forward or backward direction of the train.

JP 2019/021978 is directed to a communication system for vehicles, such as cars, and directed to provide doppler diversity.

US 2017/214128 is directed to a train communication system, where antennas are arranged in windows of the train.

There is therefore a need for an improved wireless communication system for moving vehicles, which provides better capacity utilization. Even though the above discussion is focused on trains, similar situations and problems are encountered in many other types of moving ground based vehicles, and in particular moving public transportation vehicles, such as buses and ships.

Thus, in view of the above, there is a need for an improved wireless communication system for ground based vehicles which provides better capacity, improved reliability while still being cost effective.

### SUMMARY OF THE INVENTION

It is therefore an object of the present invention to provide a wireless communication system and method for ground based vehicles, such as a train or a buss, which alleviates all or at least some of the drawbacks of presently known systems. Another object of the invention is to provide a means for robust and stable wireless connectivity in ground based vehicles.

This object is achieved by means of a wireless communication system and method for wireless data communication between a wireless communication system in a ground based vehicle and a stationary communication server outside the vehicle, as defined in the appended claims.

According to a first aspect of the invention there is provided a wireless communication system for a ground based vehicle, said wireless communication system comprising:
a router connected to a plurality of antennas, wherein the router is configured to transmit and receive wireless data communication to and from a stationary communication server outside said vehicle through at least one base station of an exterior mobile network via said antennas;
wherein said antennas are directional antennas arranged on planes of the vehicle functioning as ground planes, isolating planes or absorbing planes, each plane extending in a height direction and length direction of said vehicle, wherein at least one antenna is directed so that its antenna beam covers a laterally directed sector to a first side of the vehicle, and at least one antenna is directed so that its antenna beam covers a laterally directed sector to a second side of the vehicle, the second side being opposite to the first side.

The invention is at least partly based on the realization that by arrangement of the antennas on vertical planes functioning as ground planes, isolating planes or absorbing planes, the antennas on each side of the vehicle become separated and isolated from each other. Thus, the antennas on each side will only be in communication contact with base stations on that side of the vehicle, and not with base stations on the other side. The invention is further based on the realization that with conventional, omnidirectional antennas, it is difficult to obtain increased bandwidth and capacity by using several concurrently useable links operated by the same mobile network operator. Most countries have about three independent radio access networks, i.e. base station networks. If two modems establish connection via the same operator, or via two operators using the same radio access network, the antennas will most likely be connected to the same base station, and the same mobile mast. Hereby, even though two concurrently useable links are hereby obtained, the two links will compete against each other, and will essentially split the bandwidth that would be available if only one link to the base station was established. Thus, in such cases, the improvement in capacity by using multiple links is very limited. However, by isolating the antennas and sectors from each other, this forces the links to be established with two different base stations, even in cases where the same operator is used. Hereby, the transmission rate can be greatly improved by using two concurrently useable links, and many times doubled. Thus, by using the antenna and radio strategy of the present invention, the capacity is greatly increased.

In one embodiment, the planes function as ground planes. Hereby, each plane comprises a conductive surface, e.g. of metal, making it reflective to radio frequency (RF) waves. Hereby, any RF waves propagating in a backward direction, towards the plane, will be reflected back in a forward direction.

In another embodiment, the planes function as absorbing planes. Hereby, each plane comprises a non-conductive surface, and which is of a material and/or structure which makes the surface highly absorptive to RF waves. Hereby, any RF waves propagating in a backward direction, towards the plane, will be absorbed, and stopped from propagating past the plane.

In yet another embodiment, the planes may function as isolating planes. Hereby, each plane comprises a conductive or non-conductive surface, and which is of a material and/or structure which prohibits penetration of RF waves. Hereby, any RF waves propagating in a backward direction, towards the plane, will be stopped from propagating past the plane.

The antennas are directional antennas, which in the context of the present application is to be understood as an antenna which radiates or receives greater power in a specific sector than in other sectors in the horizontal plane, the sector having an angle of 180 degrees or less. Preferably, radiation and reception in other sectors is very limited, or even non-existent. Preferably, the antenna essentially only transmits and receives in this sector.

Thus, the antennas need not provide perfectly directed lobes, but with lobes sufficiently directed in the intended, right direction to provide sufficient directivity and isolation towards other sectors, so that the antennas are only connected to base stations in their intended sectors, and not to base stations located in other sectors.

The planes of the vehicle on which the antennas are arranged may, according to one embodiment, be provided at the exterior side walls of the vehicle. Thus, the vehicle in itself may function as the ground plane, isolating plane or absorbing plane. The antennas may e.g. be arranged directly on the sidewalls, preferably at a relatively high position, such as close to the roof. Alternatively, the antennas may be arranged on a metal plate or the like, attached to the sidewalls. The antennas may also be arranged on metallized windows, such as disclosed e.g. in WO 2016/013968 by the same applicant. By using the vehicle in itself as an isolator between the antenna, a very efficient separation and isolation is obtained, and at the same way to a very low cost, and without any addition to the height of the vehicle.

According to the claimed invention, the planes are provided on sides of a longitudinal beam extending in a length direction of the vehicle. Such a longitudinal beam, preferably made of metal or with a metallized surface, is arranged in the middle of the roof, and with an elongate shape, extending in the lengthwise direction of the vehicle. The beam should have sufficiently large vertical sides to provide adequate isolation between the antennas on the different sides. The beam may e.g. have a height in the range of 10-25 cm, and a length in the range of 50-200 cm. The beam is preferably in electrically conductive contact with the roof of the vehicle. The provision of antennas on such an elongate structure is relatively simple to produce and assemble, and can also relatively easily be retrofitted to older vehicles. Further, even such antennas may be realized with only a limited addition to the height of the vehicle.

The antennas are preferably made relatively thin, and extending in a plane parallel to the ground plane, isolating plane or absorbing plane. For example, the antenna may be a patch antenna. Since the antenna is thin, it will only protrude to a very limited extent to the sides of the vehicle side wall or to the sides of the longitudinal beam on the roof.

The antennas are preferably cross-polarized, thereby simultaneously transmitting and receiving in two different polarizations. The relative separation and isolation of the sectors for each antenna enables the use of the cross-polarized antennas. Such cross-polarized antennas are very efficient e.g. for use with MIMO, since the separation may hereby be obtained by polarization diversity instead of spatial separation. Hereby, the antennas may be arranged relatively close to each other, which facilitates mounting and manufacturing.

The antennas may be provided with fixed antenna beam directions. Hereby, the sectors provided by the antennas are fixed and static in relation to the vehicle, and are always directed in the same direction. This enables use of cost-efficient antennas, and a relatively easy installation and operation. In a preferred embodiment, the antennas are patch antennas with orthogonal polarizations. For example, the orthogonal polarizations may be provided as vertical and horizontal polarization. Alternatively, the polarization directions may be arranged in slanted dispositions, e.g. in the form of dual slant, such as being arranged in +/- 45 degrees orientations. Such an arrangement may be preferred if the antennas of the base stations with which the antennas on the vehicle are to communicate with have similar polarization orientations, which is often the case.

Alternatively, the antennas have steerable antenna beams. Hereby, the beams, i.e. the sectors, can be actively controlled by a controller, to be directed to a particular sub-sector within a generally coverable sector. The antenna may e.g. be a phased array antenna. However, other realizations are also feasible, such as a mechanically or electrically moveable antenna mount, physically directing the antenna beam in various directions.

The wireless communication system may comprise at least two antennas directed so that their antenna beams cover laterally directed sectors to a first side of the vehicle, and at least two antennas directed so that their antenna beams cover laterally directed sectors to a second side of the vehicle, the second side being opposite to the first side, wherein the sectors for the at least two antennas on each side are at least mostly non-overlapping. Hereby, the two antennas on each side may e.g. be arranged to cover essentially a sector of 90 degrees each, one in the forward direction and one in the backward direction, relating to the movement direction of the train. Hereby, the two antennas on each side may also connect to different base stations, thereby providing, in best cases, a quadrupling of the capacity compared to omnidirectional antennas solution. The sectors for the at least two antennas on each side are preferably non-overlapping.

More than two sectors on each side may also be provided, such as three antennas and three sectors on each side, or four antennas and four sectors on each side, or more. In particular more than two antennas and sectors on each side, such as three or four, are advantageous if spread out over a long vehicle, such as arranged on different carriages on a train.

By provision of antennas operating in differentiated sectors, a better capacity is obtained. Further, the more or less narrow sectors provide a higher gain and better range and coverage, and consequently a more efficient energy utilization.

In case only one sector is provided on each side of the vehicle, the sector may be directed generally perpendicular to the length direction of the vehicle, and may have an opening angle as large as 180 degrees. However, smaller opening angles are also feasible, and the sector may also be directed non-perpendicularly to the length direction, e.g. partly in a forward direction of the vehicle. In case two sectors are used on each side, the opening angle is preferably 90 degrees or less, and the sectors are preferably directed so that the overlap is minimized. For example, one sector may be directed towards a forward direction of the vehicle, and one sector may be directed towards a backward direction of the vehicle. In case three sectors are used on each side of the vehicle, the sectors may have an opening angle of 60 degrees or less, and may be directed in a forward direction, a direction perpendicular to the length direction of the vehicle, and a backward direction. Corresponding arrangements can be used when four or more sectors are provided on each side. On a long vehicle, the separation between the sectors can also be obtained by arranging the antennas far from each other, and thereby theoretically overlapping sectors may be used, since the spread apart sectors will practically not overlap much.

The sectors may be fixed in relation to the vehicle, but may also be to moveable, e.g. by use of active directional antennas.

The sectors are preferably at least mostly non-overlapping, and preferably non-overlapping. However, a small amount of overlap may still be acceptable, such as an area overlap of less than 25%, less than 20%, less than 15%, less than 10% or less than 5%.

The router is preferably connected to or including a plurality of modems, each modem being connected or connectable to at least one antenna, and preferably at least two antennas. The modems are preferably useable to establish several concurrently useable links, provided in the two or more sectors.

Preferably, several modems related to mobile network operators using the same radio access network may be provided, and preferably, several modems related to the same mobile network operator, enabling establishment of concurrently usable links with the same radio access network, and possibly even with the same operator, in different sectors, by connecting to different base stations.

Preferably, more than one modem is connected or connectable to each antenna sector, enabling a controller in the router to determine and continuously control which modem to use for establishing a communication link for each sector.

The "router" is preferably a networking router, which is a machine that forwards data packets between computer networks, preferably on at least two data links in each direction. Stated differently, the networking router is capable of providing data communication between an internal local area network (arranged within the vehicle) and an external wide area network (WAN) outside the vehicle. The router may be a mobile access router (MAR), and preferably a mobile access and applications router (MAAR).

In terms of general operation of the communication system, the router and the stationary (remote) communication server are preferably connected through a plurality of exterior mobile/cellular networks (provided by the base stations), which are simultaneously useable. Also, the router is preferably arranged to communicate with the stationary communication server on at least two different data links (communication routes) having different characteristics (e.g. on different frequency bands), and then to automatically separate the data traffic between the data links based on an evaluation of link quality. The evaluation of link quality may for example be executed as disclosed in WO 2015/169917, by the same applicant. The data streams are then forwarded on one or several links to and from a dedicated external server, which may be referred to as an aggregation server or gateway. The different links thereby form a single virtual link between the router and the gateway.

According to an embodiment, the quality of the available data links is evaluated on a host layer by repeatedly sending requests arranged to trigger a determinable automated response to the stationary communication server via the data links, and measure the time until the triggered automated responses are received, and assigning data streams to the data links at least partly based on the evaluated quality.

"Data streams" are traffic in need of routing. A stream is in the context of the present application to be seen as any and all communication with a specific combination of ultimate source and ultimate destination IP addresses and network ports, or whatever the equivalent of this would be in a networking scheme where these identifiers are not used or not sufficiently distinguishing. A stream is "created" when any entity on one side of the system seeks to communicate with any entity on the other side, using any specific combination of ports.

"Requests arranged to trigger a determinable automated response" are any active sending of a request or other provocation across a network, through a specific link, with the expectation of receiving a predetermined response, and preferably under a timeout or corresponding safeguard. The specific implementation of such requests may vary, depending on what information that should be determined, communication protocols, target host location, the amount of traffic sent and solicited, and the precise limit set by the timeout function.

The router and the stationary server are preferably connected through a plurality of exterior mobile networks, which are simultaneously useable. Also, the router is preferably arranged to communicate with the communication server on at least two different data links (communication routes) having different characteristics, and to automatically separate the communication traffic between said data links based on the evaluation. The communication can be automatically optimized based on the evaluation, and also optionally on other conditions, such as price, speed, latency, etc. Thus, in addition to the evaluation, prioritizing and assignments may be made based on other static or dynamic parameters, such as signal strength and the like. Such further optimizations are per se known from EP 1 175 757 by the same applicant. An automatic selection is then made among the available data links to use the most efficient combination. Hence, a seamless distribution of the data among the different data links is obtained.

The router may use any available data links, such as two or more of e.g. GSM, Satellite, DVB-T, HSPA, EDGE, 1X RTT, EVDO, LTE, WiFi (802.11) and WiMAX; and combine them into one virtual network connection. Specifically, the present invention is highly suitable for use with LTE, and in particular LTE of category 20, and 5G. In particular, it is preferred to use data links provided through wireless wide-area network (WWAN) communication technologies.

The selection is preferably made once for each data stream. However, re-selection for data streams that have failed may also be made. Further, data streams may also be split among two or more data links, e.g. by transferring a first part of a data stream on one data link to begin with, and then continue the transfer of the rest of the data stream on another data link, based on a re-assignment decision. Re-selection and/or re-assignment may also be made based on other criteria than complete failure of the presently used data link, such as when the evaluated quality of the link presently used is significantly deteriorated, falls below a certain threshold, or the like.

The assignment of data streams to the data links at least partly based on the evaluated quality may occur in various ways. In a preferred embodiment, the available data links are connected to merit values, e.g. integer merit values, based on the evaluated quality, in turn based on the measured test results, and optionally also based on the nominal maximum throughput (NMT) of the links. Preferably, separate merit values are assigned in each direction of traffic to each link. Links may then be weighed against each other at least partly, and preferably entirely, by these merit values. Thus, in one embodiment, all streams to links may be assigned in linear proportion to the merit values of the links.

The requests triggering a determinable automated response may be requests to a domain name system (DNS) server. A WWAN Internet service provider (ISP) will normally offer the addresses of one or more domain name system (DNS) servers, as an essential service. DNS queries can be bound to each link, to attempt to resolve a largely arbitrary domain name using one of the ISP's provided servers, or any other. Failure to respond within a given time frame is taken to mean either a general problem transferring the small amount of data, or a more specific problem with the queried DNS server.

Alternatively, the request triggering a determinable automated response may use the ICMP protocol. In particular, it is preferred that the requests triggering a determinable automated response are ECHO_REQEST datagrams, used to trigger an ECHO_RESPONSE from an arbitrary remote host. Further, the ECHO_REQESTs may be provided with a variable amount of extra padding data. Such an echo request is often referred to as "ping" or "pinging".

The evaluation and selection of data links may additionally or alternatively be based on other performance parameters, where the performance parameters can be measured and evaluated by the controller, in order to distribute data streams between the available links. The performance parameters may include at least one of: packet loss (intermittent failure for packets of data to arrive), latency (round-trip response time, hence responsiveness), throughput/bandwidth (overall rate of data transmission, whether current or potential) and a variety of radiophysical metrics, such as signal strength. The data streams are then forwarded on one or several links to and may be forwarded to a dedicated external server, which may be referred to as an aggregation server or gateway. The different links can thereby form a single virtual link between a router and the gateway.

The router may be provided as a single router, arranged somewhere in the vehicle, and preferably at a relatively central location. The router may comprise modems and SIM-cards as an integrated part of the router. However, the modems and/or SIM-cards may alternatively be arranged external from the router, and be connected to the router by wired or wireless connections. For example, it is possible to arranged the modems in the vicinity of the antennas.

The router may also be provided in the form of a plurality of routers being connected together, to form a distributed router system, as disclosed in US 2018/0020334 by the same applicant. For example, one or more routers may be arranged in each carriage.

One or several internal LAN(s) may be provided inside the moving vehicle for providing (wireless) communication between each router and at least one client (sometimes referred to as terminal) onboard. In one exemplary embodiment, each internal LAN may provide WiFi communication between the router and at least one client onboard the moving vehicle. If several carriages are provided, each carriage is preferably associated only with one internal LAN provided by one router. Thus, at least one wireless access point is arranged inside the vehicle.

The router comprises, or is connected to, a plurality of modems for communication with the at least one exterior mobile network, wherein each modem is connectable to at least two external antennas in order to enable MIMO communication. Thus, the router may comprise several antenna ports per modem, enabling MIMO for the external communication, and the high bandwidth thereby provided can then be distributed to the internal clients with e.g. 802.11n. The modems may share a plurality of antennas, each preferably only useable by one modem at the time.

Moreover, the router may further comprise a subscriber identity module (SIM) pool including a plurality of SIMs, and wherein the controller is capable of periodically assigning SIMs within the SIM pool to any one of the plurality of modems. By including a SIM pooling capability in the system the number of SIM cards (SIMs) and also the number of modems in the system can be reduced. By using a common pool of SIMs, accessible to each of the plurality of routers, the total number of SIMs may be reduced, and the SIMs available may be used more efficiently. At the same time, the accessibility for each modem to an adequate SIM at each time increases since the number of accessible SIMs can hereby be managed more efficiently. The term "periodically" is here used to indicate an assignment which is not fixed, but which is established temporarily, for a certain period of time. In particular, it hereby becomes possible to provide access for each router to one or several suitable SIM(s) in every country in which the vehicle may travel.

Pooling of SIM cards is per se known from EP 2 518 977 by the same applicant.

In the above-discussed SIM pool embodiment, the SIM cards forming the SIM pool may be arranged in the router(s). Alternatively, the SIM pool may be arranged at another unit on-board the vehicle. This allows any modem to use any SIM card. Still further, the SIM pool may be arranged outside the vehicle. Such an embodiment may be referred to as remote SIM with central SIM pool.

The SIM cards for pooling in any of the above-discussed ways need not be physical SIM cards, arranged locally or centrally, but software SIMs, also referred to as E-SIM, soft SIM or virtual SIM, may also be used.

In a preferred embodiment, the ground based vehicle is a train, and most preferably a high speed train.

According to another aspect of the present invention there is provided a method for wireless data communication between a wireless communication system in a ground based vehicle and a stationary communication server outside the vehicle, said method comprising:
providing a router within the vehicle, the router being connected to a plurality of directional antennas and configured to transmit and receive wireless data communication to and from the stationary communication server outside the vehicle through at least one base station via said directional antennas;
providing said antennas on planes of the vehicle functioning as ground planes, isolating planes or absorbing planes, each plane extending in a height direction and length direction of said vehicle;
directing at least one antenna so that its antenna beam covers a laterally directed sector to a first side of the vehicle; and
directing at least one antenna so that its antenna beam covers a laterally directed sector to a second side of the vehicle, the second side being opposite to the first side, the method characterised in that the planes are provided on sides of a longitudinal beam extending in a length direction of the ground based vehicle and arranged in the middle of the roof of said ground based vehicle.

With this aspect of the invention, similar advantages and preferred features are present as in the previously discussed first aspect of the invention, and vice versa.

These and other features and advantages of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig 1 is a schematic illustration of a train having a wireless communication system in accordance with an embodiment of the present invention;
Fig. 2 is a schematic side-view of a train having antennas arranged on the side walls in accordance with an embodiment of the present invention;
Figs. 3A and 3B are schematic illustrations of a train having antennas arranged on the sides of an elongate beam on the train roof, in accordance with a claimed
embodiment of the present invention, wherein Fig. 3A shows a side-view of the train and Fig. 3B shows a top view of the same train;
Fig. 4 is a top view schematically illustrating general beam directions and antenna sectors for an embodiment having two antennas on each side of the train, in accordance with an embodiment of the invention;
Fig. 5 is a top view schematically illustrating general beam directions and antenna sectors for an embodiment having three antennas on each side of the train, in accordance with another embodiment of the invention; and
Fig. 6 is a top view schematically illustrating general beam directions and antenna sectors for an embodiment having one antenna on each side of the train, in accordance with yet another embodiment of the invention.

### DETAILED DESCRIPTION

In the following detailed description, preferred embodiments of the present invention will be described. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the following examples, an embodiment related to a train is disclosed. However, it is to be acknowledged by the skilled reader that the method and system are correspondingly useable on other moving vehicles, such as busses and the like.

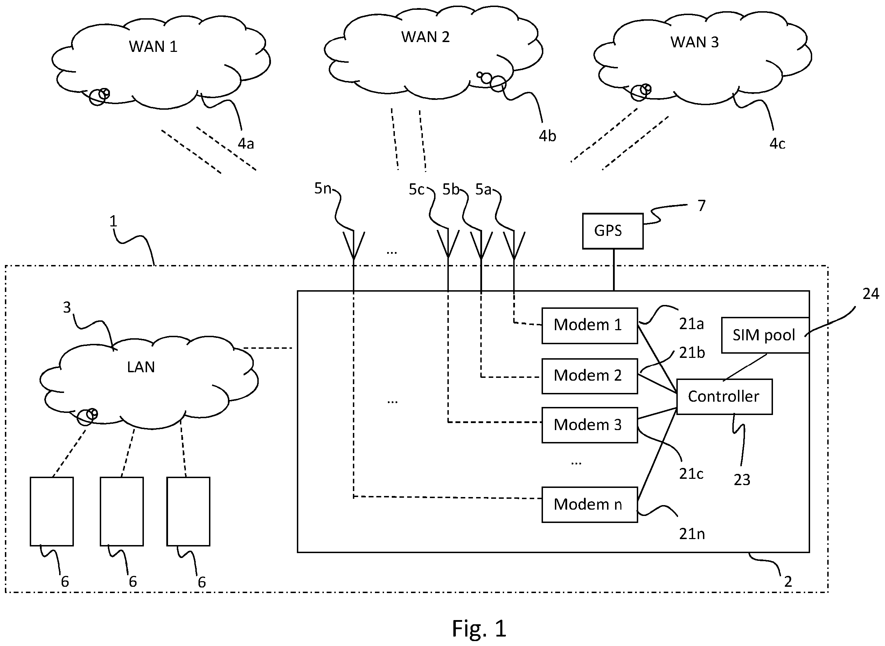

In Fig 1 a schematic illustration of a vehicle 1, such as a train, having a communication system is provided. The communication system comprises a data communication router 2 for receiving and transmitting data between an internal local area network (LAN) 3, and one or several external wide area networks (WANs) 4a, 4b, 4c. Communication to and from the WANs is provided through one or several antennas 5 a-n on the vehicle roof. Two or more data links are available, either between the train and one of the WANs, and/or by using several WANs simultaneously.

The LAN is preferably a wireless network, using one or several internal antennas to communicate with terminal units 6 within the vehicle. It is also possible to use a wired network within the vehicle. The LAN may be set-up as wireless access point(s). The client(s) 6 may be computing devices such as laptops, mobiles telephones, PDAs and so on.

The data communication router comprises a plurality of modems 21 an. Assignment of data streams to different WANs and/or to different data links on one WAN is controlled by a controller 23. The controller is preferably realized as a software controlled processor. However, the controller may alternatively be realized wholly or partly in hardware.

The system may also comprise a global positioning system (GPS) receiver 7 for receiving GPS signals indicative of the current position of the vehicle, and wherein the controller may be arranged to assign data streams to various data links also partly in dependence on said received GPS signals.

The data communication router may also be denominated MAR (Mobile Access Router) or MAAR (Mobile Access and Applications Router).

The router 2 is arranged to communicate on several different communication routes (data links) having different characteristics, such as different communication routes to and from the exterior mobile network 4, e.g. owned by different network operators or by the same network operator. The various data streams can be transferred and distributed among the plurality of routers on the different data links, based on e.g. available bandwidth, or other performance parameters, as discussed in the foregoing, and as per se disclosed in EP 2 943 011 by the same applicant.

The router 2 further has a plurality of modems 21a-n, where each antenna 5a - 5nc, or each antenna orthogonal pair, preferably is assigned and connected to a separate modem 21a-n. In case of the latter each modem 21a-n is preferably provided with 2 antenna ports for connection to each orthogonal antenna pair. However, each modem may also be provided with four or more ports for compliance with MIMO (Multiple Input Multiple Output) systems. Moreover, the router 2 preferably comprises a subscriber identity module pool (SIM pool) 24 which includes a plurality of SIMs, and the control unit 23 is accordingly configured to periodically assign SIMs within the SIM pool 24 to any one of the plurality of modems 21a-n provided within the router 2. In other words, the SIMs form a common SIM pool 24, accessible for all the modems 21a-n. The SIMs are preferably SIM cards, and the SIM pool 24 may be realized as a SIM card holder, comprising a plurality of slots for receiving a plurality of SIM cards.

The assignment of SIMs to modems at every specific time is preferably determined based on a set of rules in the controller. The set of rules may e.g. be used to assign SIMs to the modems based on information such as in which country the vehicle is currently travelling, the amount of data that has been conveyed by use of the different SIMs, the current price related to conveying data through the different SIMs, the type of data being conveyed, etc.

Furthermore, the router 2 is preferably configured for receiving and transmitting data between the internal local area network (LAN) and a plurality of external wide ware networks (WANs). The LAN is preferably a wireless network, using one or several internal antennas to communicate with clients within the vehicle 1. To this end, it is e.g. feasible to use a distributed antenna, such as a leaky feeder extending through the vehicle, but other types of antennas may also be used. The wireless network may be realized as a wireless local area network (WLAN), and may e.g. operate based on the IEEE 802.11 standard, ("Wi-Fi"), and wherein one or more access point(s) is provided in the vehicle. However, it is also possible to use a wired network within the vehicle.

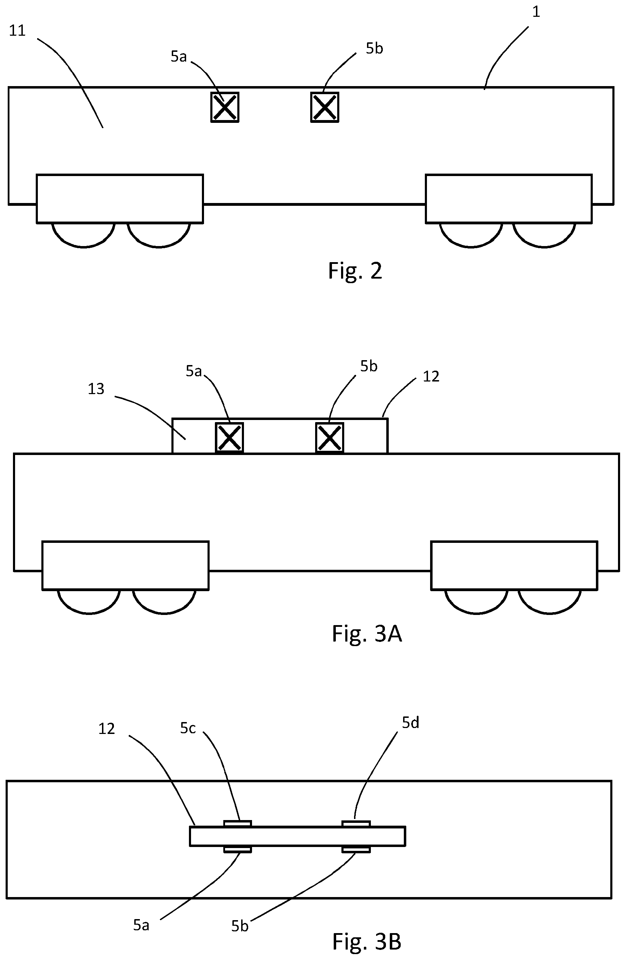

Fig. 2 illustrates a schematic side view illustration of a vehicle 1, here in the form of a train, having a wireless communication system as discussed in the foregoing. In this embodiment, the antennas are arranged on the exterior metal sidewall 11 of the vehicle, the sidewall thereby functioning as a ground plane, isolating plane or absorbing plane, thereby separating the antenna sectors on different sides of the vehicle from each other.

The antennas 5a - 5d (of which only 5a and 5b are visible in the figure) are directional antennas, which may for example be passive beam forming arrays having various polarizations. Moreover, each antenna 5a - 5d may be realized as an antenna orthogonal pair by e.g. using a dual polarized antenna setup with a 90-degree angle between two linear polarizations or using circular left- and right handed polarizations. In a preferred embodiment, relatively thin, cross-polarized patch antennas are used. The antennas are, in accordance with this embodiment, preferably arranged on a metal wall of the sidewall, and preferably in an upper part of the vehicle, relatively close to the roof. However, the antennas may also be arranged on e.g. metallized surfaces of windows arranged in the sidewalls.

However, it is also feasible to arrange the antennas on other planes of the vehicle functioning as ground planes, isolating planes or absorbing planes, and extending in a height direction and length direction of the vehicle.

In an alternative embodiment corresponding to the claimed invention, schematically illustrated in Figs. 3A and 3B, the antennas 5a-5d are arranged on the sides of an elongate structure extending in the length direction of the vehicle, the elongate structure being formed by a longitudinal beam. In the illustrative example, the longitudinal beam 12 has generally vertical sides 12 which are of metal or are metallized, thereby functioning as a ground plane. However, other types of structures forming vertical ground planes may also be used. Alternatively, the longitudinal beam may be of an absorbing material, or be provided with an absorbing material on the vertical sides. Alternatively, the longitudinal beam may be of a material or structure to function as an isolator for RF waves.

The antennas are arranged and directed to that the antenna beam covers a laterally directed sector towards the side of the vehicle on which they are arranged.

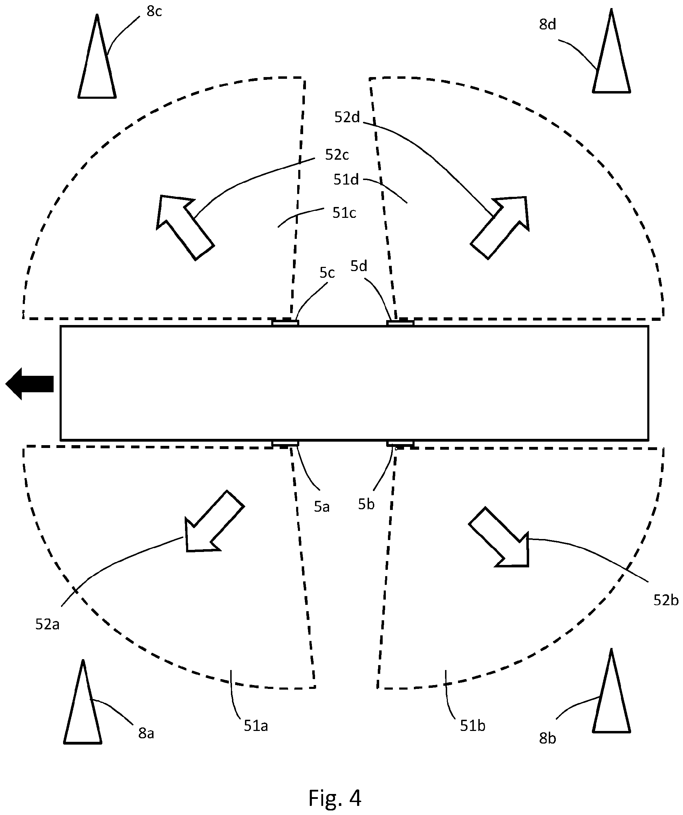

Fig. 4 schematically ilustrates this for the embodiment discussed in relation to Fig. 2 above. Here, two antennas 5a and 5b, and 5c and 5d, respectively, are formed on two different sides of the vehicle. Each antenna forms an antenna beam covering generally an antenna sector 51a-d of about 90 degrees, but slightly more or slightly less are also feasible. Thus, assuming that the vehicle is travelling to the left in the figure, as illustrated by the arrow in the figure, the antenna 5a will be directed to cover a sector 51a extending to the left and in the forward direction of the vehicle, and the beam direction 52a will generally be directed in the northwest direction, if north is considered to be the travelling direction for the vehicle. Correspondingly, the antenna 5b will be directed to cover a sector 51b extending to the left and in the backward direction of the vehicle, and the beam direction 52b will generally be directed in the southwest direction, the antenna 5c will be directed to cover a sector 51c extending to the right and in the forward direction of the vehicle, and the beam direction 52c will generally be directed in the northeast direction, whereas the antenna 5d will be directed to cover a sector 51d extending to the right and in the backward direction of the vehicle, and the beam direction 52d will generally be directed in the southeast direction.

Hereby, the antenna sectors 51a-d are, at least to a large extent, non-overlapping, making it possible for the antennas 5a-d to connect to different base stations 8a-d independently, and in a non-competing manner, as discussed in the foregoing.

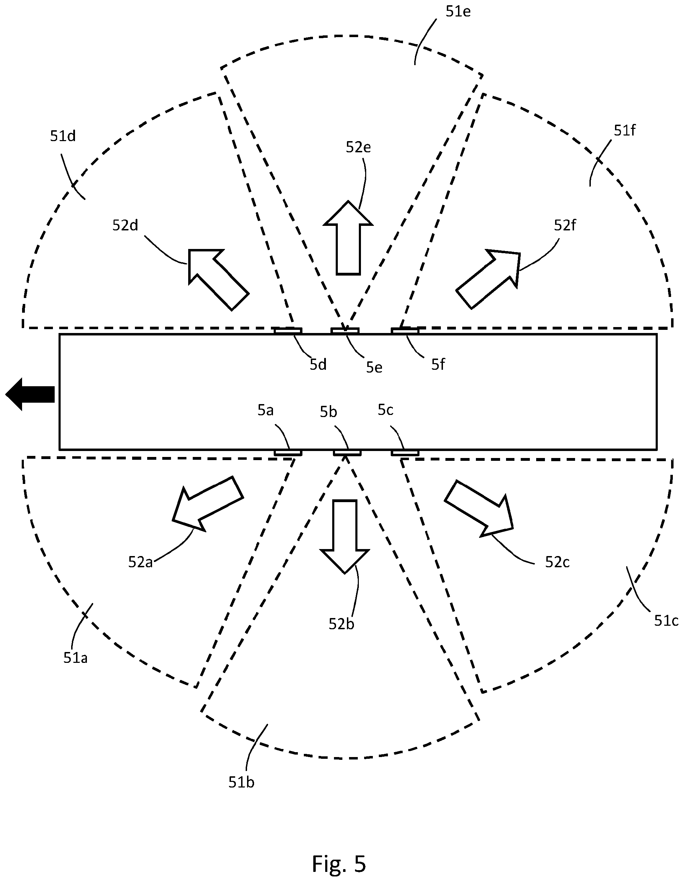

In the illustrative example of Fig. 5, an embodiment instead having three antennas on each side of the vehicle is shown, wherein antennas 5a-c are provided on a first, left side of the vehicle, and antennas 5d-f are provided on a second, right side of the vehicle. Similarly to the previously discussed embodiment, the antennas on each side forms antenna beam covering antenna sectors together generally covering the total left and right hand side, respectively, but with a limited or non-existent overlap. Here, the antenna sectors 51a-f have an opening angle of about 60 degrees, but slightly more or slightly less are also feasible.

Thus, assuming that the vehicle is travelling to the left in the figure, as illustrated by the arrow in the figure, the antenna 5a will be directed to cover a sector 51a extending to the left and in the forward direction of the vehicle, and the beam direction 52a will generally be directed somewhere between NW and NNW, if north is considered to be the travelling direction for the vehicle. Correspondingly, the antenna 5b will be directed to cover a sector 51b extending generally to the left, and the beam direction 52b will generally be directed west direction, and the antenna 5c will be directed to cover a sector 51c extending to the left and in the backward direction of the vehicle, and the beam direction 52c will generally be directed somewhere between SW and SSW. The antenna sectors provided by the antennas 5d-5f on the other side may be similar, but directed to the right/east instead.

Hereby, the antenna sectors 51a-f are, at least to a large extent, non-overlapping, making it possible for the antennas 5a-f to connect to different base stations independently, and in a non-competing manner, as discussed in the foregoing.

More than three antennas on each side may also be provided, in a similar manner.

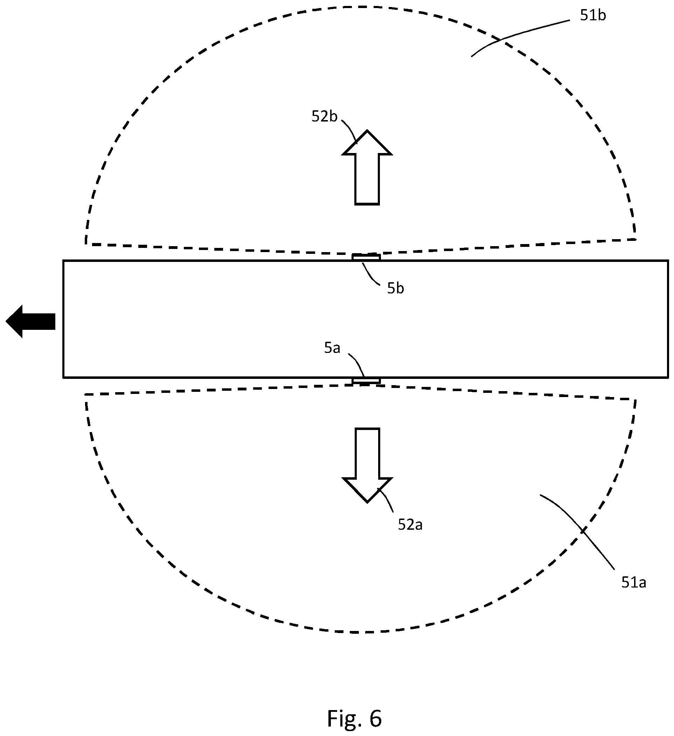

It is also possible to use only one antenna 5a, 5b on each side of the vehicle, as schematically illustrated in Fig. 6. Hereby, the antennas are preferably arranged to provide a relatively large antenna sector 51a, 51b, for example having an opening angle as large as 180 degrees, and having general beam directions 52a, 52b directed laterally to the left and right. However, smaller antenna sectors may also be used.

The invention has now been described with reference to specific embodiments. However, several variations of the communication system are feasible. For example, the router may be provided in various ways, such as in a single unit, or in multiple unit, forming a distributed router system. Further, any number of antennas and corresponding antenna sectors may be provided on either side of the vehicle. Still further, the antenna sectors may be entirely non-overlapping, but various degrees of overlap may also be tolerated. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A wireless communication system for a ground based vehicle (1), said wireless communication system comprising:
a router (2) connected to a plurality of antennas (5a-n), wherein the router is configured to transmit and receive wireless data communication to and from a stationary communication server outside said vehicle through at least one base station (8a-d) of an exterior mobile network via said antennas;
wherein said antennas (5a-n) are directional antennas arranged on planes of the vehicle functioning as ground planes, isolating planes or absorbing planes, each plane extending in a height direction and length direction of said vehicle, wherein at least one antenna is directed so that its antenna beam covers a laterally directed sector (51a-f) to a first side of the vehicle, and at least one antenna is directed so that its antenna beam covers a laterally directed sector (51a-f) to a second side of the vehicle, the second side being opposite to the first side, **characterized in that** the planes are provided on sides of a longitudinal beam extending in a length direction of the ground based vehicle and arranged in the middle of the roof of said ground based vehicle.

2. The wireless communication system of any one of the preceding claim, wherein the antennas are cross-polarized, thereby simultaneously transmitting and receiving in two different polarizations.

3. The wireless communication system of any one of the preceding claims, wherein the antennas are provided with fixed antenna beam directions.

4. The wireless communication system of any one of the preceding claims, wherein the antennas are patch antennas with orthogonal polarizations, such as vertical and horizontal polarizations or +/- 45 degrees dual slant orientations.

5. The wireless communication system of any one of the claims 1-2, wherein the antennas have steerable antenna beams

6. The wireless communication system of claim 5, wherein the antenna is a phased array antenna.

7. The wireless communication system of any one of the preceding claims, wherein at least two antennas (5a-n) are directed so that their antenna beams cover laterally directed sectors (51a-f) to a first side of the vehicle, and at least two antennas are directed so that their antenna beams cover laterally directed sectors (51a-f) to a second side of the vehicle, the second side being opposite to the first side, wherein the sectors for the at least two antennas on each side are at least mostly non-overlapping.

8. The wireless communication system of claim 7, wherein the sectors (51a-f) for the at least two antennas on each side are non-overlapping.

9. The wireless communication system of any one of the preceding claims, wherein the router (2) comprises, or is connected to, a plurality of modems (21a-n) for communication with at least one exterior mobile network.

10. The wireless communication system of any one of the preceding claims, wherein the router comprises a at least one modem for communication with the at least one exterior mobile network, wherein the modem is connectable to at least two of said plurality of antennas in order to enable MIMO (multiple input multiple output) communication.

11. The wireless communication system of any one of the preceding claims, wherein the router comprises a plurality of modems for communication with said at least one exterior mobile network, wherein each modem is connectable to at least two external antennas in order to enable MIMO (multiple input multiple output) communication.

12. A train, comprising the wireless communication system of any one of the preceding claims.

13. A method for wireless data communication between a wireless communication system in a ground based vehicle and a stationary communication server outside the vehicle, said method comprising:
providing a router within the vehicle, the router being connected to a plurality of directional antennas and configured to transmit and receive wireless data communication to and from the stationary communication server outside the vehicle through at least one base station via said directional antennas;
providing said antennas on planes of the vehicle functioning as ground planes, isolating planes or absorbing planes, each plane extending in a height direction and length direction of said vehicle;
directing at least one antenna so that its antenna beam covers a laterally directed sector to a first side of the vehicle; and
directing at least one antenna so that its antenna beam covers a laterally directed sector to a second side of the vehicle, the second side being opposite to the first side,
**characterized in that** the planes are provided on sides of a longitudinal beam extending in a length direction of the ground based vehicle and arranged in the middle of the roof of said ground based vehicle.

## Patentansprüche

1. Drahtloses Kommunikationssystem für ein bodenbasiertes Fahrzeug (1), wobei das drahtlose Kommunikationssystem umfasst:
einen Router (2), der an mehrere Antennen (5a-n) angeschlossen ist, wobei der Router ausgestaltet ist, um eine drahtlose Datenkommunikation zu und von einem stationären Kommunikationsserver außerhalb des Fahrzeugs durch wenigstens eine Basisstation (8a-d) eines externen mobilen Netzwerks über die Antennen zu übertragen und zu empfangen;
wobei die Antennen (5a-n) Richtantennen sind, die auf Ebenen des Fahrzeugs angeordnet sind, die als Bodenebenen, Isolationsebenen oder dämpfende Ebenen fungieren, wobei jede Ebene sich in einer Höhenrichtung und einer Längenrichtung des Fahrzeugs erstreckt, wobei wenigstens eine Antenne derart gerichtet ist, dass ihre Antennenkeule einen seitlich gerichteten Abschnitt (51a-f) zu einer ersten Seite des Fahrzeugs abdeckt und wenigstens eine Antenne derart gerichtet ist, dass ihre Antennenkeule einen seitlich gerichteten Abschnitt (51a-f) zu einer zweiten Seite des Fahrzeugs abdeckt, wobei die zweite Seite der ersten Seite gegenüber angeordnet ist, **dadurch gekennzeichnet, dass** die Ebenen auf Seiten einer Längskeule bereitgestellt sind, die sich in einer Längenrichtung des bodenbasierten Fahrzeugs erstreckt und in der Mitte des Dachs des bodenbasierten Fahrzeugs angeordnet ist.

2. Drahtloses Kommunikationssystem nach irgendeinem der vorstehenden Ansprüche, wobei die Antennen kreuzpolarisiert sind, wodurch sie gleichzeitig in zwei unterschiedlichen Polarisierungen übertragen und empfangen.

3. Drahtloses Kommunikationssystem nach irgendeinem der vorstehenden Ansprüche, wobei die Antennen mit festen Antennenkeulen-Richtungen bereitgestellt sind.

4. Drahtloses Kommunikationssystem nach irgendeinem der vorstehenden Ansprüche, wobei die Antennen Patchantennen mit orthogonalen Polarisierungen, wie z.B. vertikalen und horizontalen Polarisierungen oder mit dualen Neigungsausrichtungen mit +/- 45 Grad sind.

5. Drahtloses Kommunikationssystem nach irgendeinem der Ansprüche 1-2, wobei die Antennen steuerbare Antennenkeulen aufweisen.

6. Drahtloses Kommunikationssystem nach Anspruch 5, wobei die Antenne eine phasengesteuerte Gruppenantenne ist.

7. Drahtloses Kommunikationssystem nach irgendeinem der vorstehenden Ansprüche, wobei wenigstens zwei Antennen (5a-n) derart gerichtet sind, dass ihre Antennenkeulen seitlich gerichtete Abschnitte (51a-f) zu einer ersten Seite des Fahrzeugs abdecken und wenigstens zwei Antennen derart gerichtet sind, dass ihre Antennenkeulen seitlich gerichtete Abschnitte (51a-f) zu einer zweiten Seite des Fahrzeugs abdecken, wobei die zweite Seite der ersten Seite gegenüber angeordnet ist, wobei die Abschnitte für die wenigstens zwei Antennen auf jeder Seite wenigstens größtenteils nicht überlappend sind.

8. Drahtloses Kommunikationssystem nach Anspruch 7, wobei die Abschnitte (51a-f) für die wenigstens zwei Antennen auf jeder Seite nicht überlappend sind.

9. Drahtloses Kommunikationssystem nach irgendeinem der vorstehenden Ansprüche, wobei der Router (2) mehrere Modems (21a-n) zur Kommunikation mit wenigstens einem externen mobilen Netzwerk umfasst oder daran angeschlossen ist.

10. Drahtloses Kommunikationssystem nach irgendeinem der vorstehenden Ansprüche, wobei der Router wenigstens ein Modem zur Kommunikation mit dem wenigstens einen externen mobilen Netzwerk umfasst, wobei das Modem an wenigstens zwei der mehrere Antennen anschließbar ist, um eine MIMO-Kommunikation (Multiple Input, Multiple Output-Kommunikation) zu ermöglichen.

11. Drahtloses Kommunikationssystem nach irgendeinem der vorstehenden Ansprüche, wobei der Router mehrere Modems zur Kommunikation mit dem wenigstens einen externen mobilen Netzwerk umfasst, wobei jedes Modem an wenigstens zwei externe Antennen anschließbar ist, um eine MIMO-Kommunikation (Multiple Input, Multiple Output-Kommunikation) zu ermöglichen.

12. Zug, umfassend das drahtlose Kommunikationssystem nach irgendeinem der vorstehenden Ansprüche.

13. Verfahren zur drahtlosen Datenkommunikation zwischen einem drahtlosen Kommunikationssystem in einem bodenbasierten Fahrzeug und einem stationären Kommunikationsserver außerhalb des Fahrzeugs, wobei das Verfahren umfasst:
Bereitstellen eines Routers innerhalb des Fahrzeugs, wobei der Router an mehrere Richtantennen angeschlossen und zum Übertragen und Empfangen einer drahtlosen Datenkommunikation zu und von dem stationären Kommunikationsserver außerhalb des Fahrzeugs durch wenigstens eine Basisstation über die Richtantennen ausgestaltet ist;
Bereitstellen der Antennen auf Ebenen des Fahrzeugs, die als Bodenebenen, Isolationsebenen oder dämpfende Ebenen fungieren, wobei sich jede Ebene in einer Höhenrichtung und einer Längenrichtung des Fahrzeugs erstreckt;
Richten wenigstens einer Antenne derart, dass ihre Antennenkeule einen seitlich gerichteten Abschnitt zu einer ersten Seite des Fahrzeugs abdeckt; und
Richten wenigstens einer Antenne derart, dass ihre Antennenkeule einen seitlich gerichteten Abschnitt zu einer zweiten Seite des Fahrzeugs abdeckt, wobei die zweite Seite der ersten Seite gegenüber angeordnet ist,
**dadurch gekennzeichnet, dass** die Ebenen auf Seiten einer Längskeule bereitgestellt sind, die sich in einer Längenrichtung des bodenbasierten Fahrzeugs erstreckt und in der Mitte des Dachs des bodenbasierten Fahrzeugs angeordnet ist.

## Revendications

1. Système de communication sans fil pour un véhicule au sol (1), ledit système de communication sans fil comprenant :
un routeur (2) connecté à une pluralité d'antennes (5a-n), dans lequel le routeur est configuré pour transmettre et recevoir une communication de données sans fil vers et depuis un serveur de communication stationnaire à l'extérieur dudit véhicule via au moins une station de base (8a-d) d'un réseau mobile extérieur via lesdites antennes ;
dans lequel lesdites antennes (5a-n) sont des antennes directionnelles agencées sur des plans du véhicule fonctionnant comme plans de masse, plans isolants ou plans absorbants, chaque plan s'étendant dans une direction de hauteur et une direction de longueur dudit véhicule, dans lequel au moins une antenne est orientée de sorte que son faisceau d'antenne couvre un secteur orienté latéralement (51a-f) vers un premier côté du véhicule, et au moins une antenne est orientée de sorte que son faisceau d'antenne couvre un secteur orienté latéralement (51a-f) vers un deuxième côté du véhicule, le deuxième côté étant opposé au premier côté, **caractérisé en ce que** les plans sont prévus sur les côtés d'une poutre longitudinale s'étendant dans une direction longitudinale du véhicule au sol et disposée au milieu du toit dudit véhicule au sol.

2. Système de communication sans fil selon une quelconque des revendications précédentes, dans lequel les antennes sont à polarisation croisée, transmettant et recevant ainsi simultanément dans deux polarisations différentes.

3. Système de communication sans fil selon une quelconque des revendications précédentes, dans lequel les antennes sont pourvues de directions de faisceau d'antenne fixes.

4. Système de communication sans fil selon une quelconque des revendications précédentes, dans lequel les antennes sont des antennes patch avec des polarisations orthogonales, telles que des polarisations verticale et horizontale ou des orientations à double inclinaison à +/- 45 degrés.

5. Système de communication sans fil selon une quelconque des revendications 1-2, dans lequel les antennes ont des faisceaux d'antenne orientables

6. Système de communication sans fil selon la revendication 5, dans lequel l'antenne est une antenne réseau à commande de phase.

7. Système de communication sans fil selon une des revendications précédentes, dans lequel au moins deux antennes (5a-n) sont orientées de sorte que leurs faisceaux d'antenne couvrent des secteurs orientés latéralement (51a-f) vers un premier côté du véhicule, et au moins deux antennes sont orientées de sorte que leurs faisceaux d'antenne couvrent latéralement des secteurs orientés (51a-f) vers un deuxième côté du véhicule, le deuxième côté étant opposé au premier côté, dans lequel les secteurs pour les au moins deux antennes de chaque côté ne se superposent pas au moins pour la plupart.

8. Système de communication sans fil selon la revendication 7, dans lequel des secteurs (51a-f) pour les au moins deux antennes de chaque côté ne se superposent pas.

9. Système de communication sans fil selon une quelconque des revendications précédentes, dans lequel le routeur (2) comprend, ou est connecté à, une pluralité de modems (21a-n) pour communiquer avec au moins un réseau mobile extérieur.

10. Système de communication sans fil selon une des revendications précédentes, dans lequel le routeur comprend au moins un modem pour communiquer avec le au moins un réseau mobile extérieur, dans lequel le modem peut être connecté à au moins deux de ladite pluralité d'antennes afin de permettre une communication MIMO (multiple input multiple output).

11. Système de communication sans fil selon une des revendications précédentes, dans lequel le routeur comprend une pluralité de modems pour communiquer avec ledit au moins un réseau mobile extérieur, dans lequel chaque modem peut être connecté à au moins deux antennes externes afin de permettre une communication MIMO (multiple input multiple output).

12. Train, comprenant le système de communication sans fil selon une quelconque des revendications précédentes.

13. Procédé de communication de données sans fil entre un système de communication sans fil dans un véhicule au sol et un serveur de communication fixe à l'extérieur du véhicule, ledit procédé comprenant de :
fournir un routeur à l'intérieur du véhicule, le routeur étant connecté à une pluralité d'antennes directionnelles et configuré pour transmettre et recevoir une communication de données sans fil vers et depuis le serveur de communication fixe à l'extérieur du véhicule via au moins une station de base via lesdites antennes directionnelles ;
fournir lesdites antennes sur des plans du véhicule fonctionnant comme plans de masse, plans isolants ou plans absorbants, chaque plan s'étendant dans une direction de hauteur et une direction de longueur dudit véhicule
orienter au moins une antenne de sorte que son faisceau d'antenne couvre un secteur orienté latéralement vers un premier côté du véhicule ; et
orienter au moins une antenne de sorte que son faisceau d'antenne couvre un secteur orienté latéralement vers un deuxième côté du véhicule, le deuxième côté étant opposé au premier côté,
**caractérisé en ce que** les plans sont prévus sur les côtés d'un faisceau longitudinal s'étendant dans une direction longitudinale du véhicule au sol et disposé au centre du toit dudit véhicule au sol.
